Europäisches Patentamt

**European Patent Office**

**Office européen des brevets**

(19)

(11) Publication number: **0 075 226**
**A1**

(12) # EUROPEAN PATENT APPLICATION

(21) Application number: **82108386.2**

(22) Date of filing: **11.09.82**

(51) Int. Cl.³: **F 16 L 41/08**

(30) Priority: **17.09.81 IT 3075581 U**

(43) Date of publication of application: **30.03.83**
**Bulletin 83/13**

(84) Designated Contracting States: **AT BE CH DE FR GB LI NL SE**

(71) Applicant: **LOWARA S.p.A., Via Dott. Vittorio Lombardi, I-36075 Montecchio Maggiore Vicenza (IT)**

(72) Inventor: **Lovisetto, Primo, Via Mentana, 21, I-36100 Vicenza (IT)**

(74) Representative: **Modiano, Guido et al, MODIANO & ASSOCIATI S.A.S. Via Meravigli, 16, I-20123 Milan (IT)**

(54) **Roll-formed and drawn sheet metal sealed coupling for pumps and the like.**

(57) The sealed coupling comprises an outer body (1) formed from deep drawn sheet metal and a threaded inner tube length (6) made rigid with the outer body (1) by force-fitting a flanged zone (8) of the inner tube (6) into the outer body (1), between the flanged zone (8) and outer body (1) there being interposed a rubber-like sealing gasket (9).

0075226

TITLE
see front page

This invention relates to a roll-formed and drawn sheet metal coupling with sealing gasket.

It is a known fact that outlet and inlet fittings for pumps or tanks comprise threaded unions or couplings, which are variously constructed to enable pipe connections. These known fittings are however structurally rather complex and require a lot of specialized labour both during the making and in the assembling thereof.

Accordingly the task of this invention is to provide a sheet metal coupling through simple and low cost manufacturing and assembling procedures.

Within this task it is an object of the invention to provide a coupling, which can be sealed hydraulically without resorting to the welding of metal parts.

Another object of this invention is to provide a coupling, which incorporates a means of sealing it to a pipe threaded thereinto.

According to one aspect of the invention the above task and objects as well as yet other objects, such as will be apparent hereinafter, are achieved by a roll-formed and drawn sheet metal coupling with sealing gasket, characterized in that it comprises an outer enclosing body formed from deep drawn sheet metal and a threaded inner tube made rigid with said outer body by force-fitting a flanged zone thereof into said outer body, between said flanged zone and said outer body there being interposed a resilient or rubber-like sealing ring or gasket.

The invention features will be more clearly understood by making reference to the detailed description which follows of a preferred embodiment thereof, as shown in the accompanying illustrative drawing, where:

Figure 1 is a top plan view of this coupling; and

Figure 2 shows an axial section view taken along the line II-II of Figure 1.

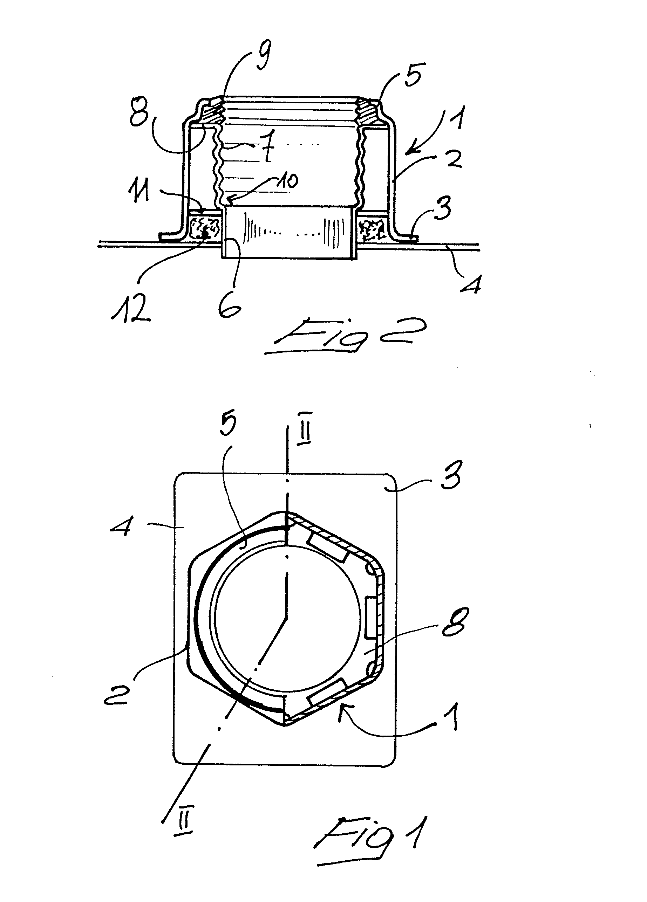

With reference to the cited drawing figures, the coupling according to this invention comprises an enclosing outer body 1 formed by deep drawing from sheet metal (preferably, stainless steel) which is configured to have a hexagonal cross-section zone 2, a wide outer abutment flange 3 adapted for welding to a pump body (or housing of another kind), and a top inner flange 5 obtained by pinching the material.

In the inside of the body 1 there is provided a tube member 6, rolled on the outer surface of a portion 7 thereof, whereby a thread is obtained into which the termination of the pipe to be coupled will be threaded, which tube member 6 has at the top a hexagonal flange formation 8, which flange, by interfering with the inside walls of the hexagonal zone 2, makes the tube 6 rigid with the outer body 1.

During the force-fitting operation, a ring or gasket 9 of a rubber-like or resilient material is also interposed which is blocked between the inner flange 5 and hexagonal flange formation 8, to provide a seal therebetween and protrude internally such as to interfere and sealingly engage with the pipe being threaded
into the coupling.

At its bottom portion, the tube 6 has a necked in
area 10 which creates an outer shoulder, on which a
diaphragm 11 is brought to bear which allows the insertion
of an additional sealing ring 12 prior to welding the
coupling to the pump or tank body 4.

It will be appreciated from the foregoing that
all the component parts of the coupling are manufactured
by die-cutting and drawing sheet metal without any
further finishing process.

On assembling, the seals are accomplished, rather
than by seam welding the various parts, by merely
inserting sealing rings in specially provided seats.

Even during the later threading of a pipe into
the coupling, no intermediate elements need be provided
because a gasket which interferes with the pipe outer
wall has been incorporated.

Hence, it will be apparent that the invention does
achieve all its objects.

Of course, the materials and dimensions may be
any selected ones to meet individual requirements.

0075226

## CLAIMS

1. A roll-formed and drawn sheet metal coupling with sealing gasket, characterized in that it comprises an outer enclosing body (1) formed from deep drawn sheet metal and a threaded inner tube (6) made rigid with said outer body (1) by force- fitting a flanged zone (8) thereof into said outer body, between said flanged zone (8) and said outer body (1) there being interposed a resilient or rubber-like sealing ring or gasket (9).

2. A coupling according to Claim 1, characterized in that said outer enclosing body (1) has a hexagonal intermediate zone (2), a wide outer abutment flange formation (3), and an annular top inner flange (5).

3. A coupling according to Claims 1 and 2, characterized in that said tube (6) has a hexagonal outer flange formation (8) adapted to interfere by force-fitting in the inside of said hexagonal intermediate zone (2) of said outer body (1), in such a way as to provide a firm connection.

4. A coupling according to one or more of the preceding claims, characterized in that between said annular inner flange (5) of the outer body (1) and said tube (6) hexagonal flange formation (8), there is interposed said resilient or rubber-like ring (9), said rubber-like ring (9) being squeezed and providing a seal between said two parts upon assembling the coupling.

5. A coupling according to one or more of the preceding claims, characterized in that said tube (6) has a zone thereof (7) roll-formed to create a thread for threaded connection to system piping.

6. A coupling according to one or more of the preceding claims, characterized in that said rubber-like ring (9) protrudes internally to interfere with a pipe being threaded therein and create a seal therewith.

7. A coupling according to one or more of the preceding claims, characterized in that an additional sealing ring (12) is inserted between said wide outer flange (3) and the body (4) of a tank or pump, prior to welding said wide outer flange to said tank or pump body (4) wherewith it is to be associated.

8. A coupling according to one or more of the preceding claims, characterized in that all of the metal parts which make up said coupling are manufactured by die-cutting, drawing, and roll-forming from sheet metal.

9. A roll-formed and drawn sheet metal coupling with sealing gasket, as herein claimed, described, and illustrated for the objects specified.

0075226

Fig 2

Fig 1

0075226

# EUROPEAN SEARCH REPORT

European Patent Office

Application number

EP 82 10 8386

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| | --- | | F 16 L 41/08 |
| A | GB-A-1 422 355 (TRW INC.) | | |
| | --- | | |
| A | US-A-3 747 962 (BAUMAN) | | |
| | --- | | |
| A | US-A-2 747 896 (QUILLINAN) | | |
| | --- | | |
| A | US-A-2 482 944 (SHORE) | | |
| | --- | | |
| A | US-A-2 476 656 (GALBRAITH) | | |
| | ----- | | |

TECHNICAL FIELDS SEARCHED (Int. Cl. ³)

F 16 L 41/00
F 16 L 15/00

The present search report has been drawn up for all claims

| Place of search BERLIN | Date of completion of the search 02-12-1982 | Examiner SCHLABBACH M |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82